# EUROPEAN PATENT APPLICATION

(11) **EP 2 169 928 A1**
(43) Date of publication of application: **31.03.2010**
(21) Application number: 08784029.4
(22) Date of filing: 19.08.2008
(51) Int. Cl.: H04M 3/42

(54) **METHOD AND SYSTEM OF REALIZING COLOR-RING AND COLOR-RING TONE PLAYING AND COLOR-RING CENTER**

(30) Priority: 22.08.2007 CN 200710143078
(71) Applicant: Huawei Technologies Co., Ltd., Longgang District, Shenzhen Guangdong 518129 (CN)
(72) Inventor: FAN, Tao, Guangdong 518129 (CN); WU, Lingyan, Guangdong 518129 (CN)
(74) Representative: Körber, Martin Hans
(86) International application number: PCT/CN2008/072038
(87) International publication number: WO 2009/026823

(57) **Abstract**

Embodiments of the invention relate to the technical field of communication services. The disclosure relates to a method, system, and apparatus for playing tones. An embodiment of the disclosure provides a method for playing a CRBT, including: receiving, by a CRBT center, a call request from a caller, and obtaining a group identification from a standard compliant group management component; obtaining a CRBT for the caller based on the group identification, and playing the CRBT. The disclosure also provides a method for playing a CRT, including: receiving, by a CRT center, a call request from a caller, and obtaining a group identification from a standard compliant group management component; obtaining a CRT for the callee based on the group identification, and playing the CRT. Also disclosed are systems and an apparatuses corresponding to the above methods. The methods, systems, and apparatuses for playing tones according to the embodiments of the invention may implement CRBT and CRT services in the PS domain, and allows other systems to share the group information defined for the CRBT and CRT.

## Description

### CROSS-REFERENCE TO RELATED APPLICATIONS

This patent application claims priority to Chinese Patent Application No. 200710143078.9, filed on August 22, 2007, the entirety of which is incorporated herein by reference.

### FIELD OF THE INVENTION

The invention relates to the technical field of communication services, and more particularly, to methods and systems for playing a Customized Ring-Back-Tone (CRBT) and a Customized Ring-Tone (CRT), and a CRBT center.

### BACKGROUND

At present, tone playing services provided by telecommunication operators may include a Customized Ring-Back-Tone (CRBT) service and a Customized Ring-Tone (CRT) service.

In the CRBT service, instead of a normal ring back tone, a euphonic music segment, a video segment, or a greeting is customized by a callee and provided to a caller. After a user subscribes as a subscriber of the CRBT service, he/she may customize an RBT via the network, by dialing an access number, etc.

The current CRBT services may be divided into personal CRBT service and group CRBT service. A user subscribing to the personal CRBT service may play the same pre-customized RBT to different callers. A user subscribing to the group CRBT service may divide the callers into groups, customize an RBT for each group, and play to a caller an RBT pre-customized for a group to which the caller belongs.

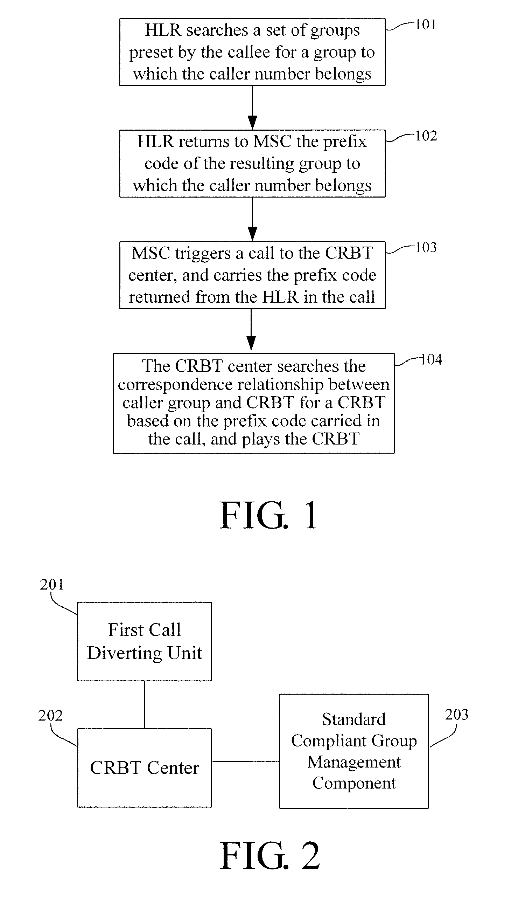

In the related arts, there are two methods for implementing the group CRBT service in the Circuit Switch (CS) domain. The first method is shown in FIG. 1, and it may include steps as follows.

In step 101, a Home Location Register (HLR) searches a set of groups preset by the callee for a group to which the caller number belongs.

In step 102, the HLR returns to a Mobile Switching Center (MSC) the prefix code of the resulting group to which the caller belongs.

In step 103, the MSC triggers a call to a CRBT center, and carries the prefix code returned from the HLR in the call.

In step 104, the CRBT center searches the correspondence relationship information between caller group and CRBT for a CRBT based on the prefix code carried in the call, and plays the CRBT.

In the above method, the set of groups preset by the callee is stored in the HLR, and the set of groups includes at least a general group and a default group. Each general group corresponds to a general prefix code, and includes a list of caller numbers for which the same CRBT is to be played. The default group corresponds to a default prefix code.

The related arts provide another method for implementing the group CRBT service, which may differ from the above method in the following aspects.

A Visitor Location Register (VLR) searches a set of groups preset by the callee for a group to which the caller number belongs, and returns to the MSC the prefix code of the resulting group to which the caller belongs. In this method, the set of groups preset by the callee is stored in the VLR.

In the CRT service, instead of a normal ring tone, a euphonic music segment, a video segment, or a greeting is customized by the caller and provided to the callee. After a user subscribes as a subscriber of the CRT service, he/she may customize an RT via the network, by dialing an access number, etc.

### SUMMARY

The technical problem to be solved in an embodiment of the invention is to provide a method, a system, and a CRBT center for playing a CRBT, which may allow other systems to share the group information.

To solve the above technical problem, an embodiment of the invention provides a method for playing a CRBT, including:
receiving, by a CRBT center, a call request from a caller, and obtaining a group identification from a standard compliant group management component; and
matching, by the CRBT center, the group identification with group identifications in a correspondence relationship between group identification and CRBT preset by a callee, and playing a CRBT matching the group identification to the caller.

Also, an embodiment of the invention provides a CRBT center, including a call receiving unit, a first group identification obtaining unit, and a CRBT searching and playing unit.

The call receiving unit is configured to receive a call request from a caller.

The first group identification obtaining unit is configured to obtain a group identification from a standard compliant group management component.

The CRBT searching and playing unit is configured to match the group identification with group identifications in a correspondence relationship between group identification and CRBT preset by a callee, and to play a CRBT matching the group identification to the caller.

Also, an embodiment of the invention provides a system for playing a CRBT, including a CRBT center, a first call diverting unit, and a standard compliant group management component.

The first call diverting unit is configured to obtain a call request from a caller, and to divert the call request to the CRBT center.

The standard compliant group management component is configured to store a group identification preset by a user.

The CRBT center is configured to receive the call request from the caller, to obtain a group identification from the standard compliant group management component, to match the group identification with group identifications in a correspondence relationship between group identification and CRBT preset by a callee, and to play a CRBT matching the group identification to the caller.

In the method and system for playing a CRBT as provided in an embodiment of the invention, the CRBT center may search for the user's group information, and determine a group to which the caller belongs and the CRBT corresponding to the group. Thus, in the embodiment, the group information preset by the user may be stored in the standard compliant group management component. Because the group information, managed in the standard compliant group management component is compliant with standard communication specifications, other systems needing the group information, such as billing systems, messaging systems, or the like, may share the group information in the CRBT service. Repetitive definition of the group information may be avoided, and system resources may be saved.

The technical problem to be solved in another embodiment of the invention is to provide a method and system for playing a CRT, which enables implementation of the group CRT service within the PS domain.

To solve the above technical problem, the method for playing a CRT as provided in the embodiment of the invention may include:
receiving, by a CRT center, a call request from a caller, and obtaining a group identification from a standard compliant group management component; and
matching, by the CRT center, the group identification with group identifications in a correspondence relationship between group identification and CRT preset by the caller, and playing a CRT matching the group identification to the callee.

An embodiment of the invention also provides a system for playing a CRT, including a CRT center, a standard compliant group management component, and a second call diverting unit.

The second call diverting unit is configured to obtain a call request from a caller, and to divert the call request to the CRT center when determining that the caller has subscribed for the CRT service.

The standard compliant group management component is configured to store a group identification preset by a user.

The CRT center is configured to receive the call request from the caller, to obtain a group identification from the standard compliant group management component, to match the group identification with group identifications in a correspondence relationship between group identification and CRT preset by the caller, and to play a CRT matching the group identification to the callee.

In the method and system for playing a CRT as provided in another embodiment of the invention, upon receipt of the call request from the caller, the CRT center exchanges information with the standard compliant group management component, and determines a CRT to be played to the callee based on the correspondence relationship between group identification and CRT preset by the caller. The group CRT service is thus implemented in the PS domain. Further, because the group information managed in the standard compliant group management component complies with standard communication specifications, other systems needing the group information, such as billing systems, messaging systems, CRBT systems, or the like, may share the group information in the CRT service. Repetitive definition of the group information may be avoided, and system resources may be saved.

### BRIEF DESCRIPTION OF THE DRAWINGS

FIG.1 is a flow chart showing a method for implementing the CRBT service in the prior art;

FIG.2 is a block diagram showing the configuration of a system for playing a CRBT according to an embodiment of the invention;

FIG.3 is a flow chart showing a method for playing a CRBT according to an embodiment of the invention;

FIG.4 is a flow chart showing a method for playing a CRBT according to an embodiment of the invention;

FIG.5 is a flow chart showing a method for playing a CRBT according to an embodiment of the invention;

FIG.6 is a flow chart showing a method for setting a group CRBT according to an embodiment of the invention;

FIG.7 is a flow chart showing a method for setting a personal CRBT according to an embodiment of the invention;

FIG.8 shows a page on which the personal CRBT is set according to an embodiment of the invention;

FIG.9 is a flow chart showing a method for data update by the CRBT center and XDMS Group according to an embodiment of the invention;

FIG.10A is a block diagram showing the configuration of a CRBT center according to an embodiment of the invention;

FIG.10B is a block diagram showing the configuration of a CRBT center according to an embodiment of the invention;

FIG.10C is a block diagram showing the configuration of a CRBT center according to an embodiment of the invention;

FIG.11 is a block diagram showing the configuration of a system for playing a CRT according to an embodiment of the invention; and

FIG.12 is a flow chart showing a method for playing a CRT according to an embodiment of the invention.

### DETAILED DESCRIPTION

To make the objects, technical solutions, and advantages of the invention more clear and easier to be understood, detailed descriptions will be made to the embodiments of the invention with reference to the accompanying drawings.

First, an overall description will be made to a system for playing a CRBT according to an embodiment of the invention. Referring to FIG. 2, the system includes a first call diverting unit 201, a CRBT center 202, and a standard compliant group management component 203.

The first call diverting unit 201 is configured to obtain the subscription information of a callee according to the callee number carried in a call request from a caller, and to determine whether the callee has subscribed for the CRBT service. If the callee has subscribed for the CRBT service, the call request from the caller is diverted to the CRBT center 202.

The CRBT center 202 receives the call request from the caller, obtains a group identification from the standard compliant group management component 203, matches the group identification with group identifications in a correspondence relationship between group identification and CRBT preset by the callee, and plays a CRBT matching the group identification to the caller.

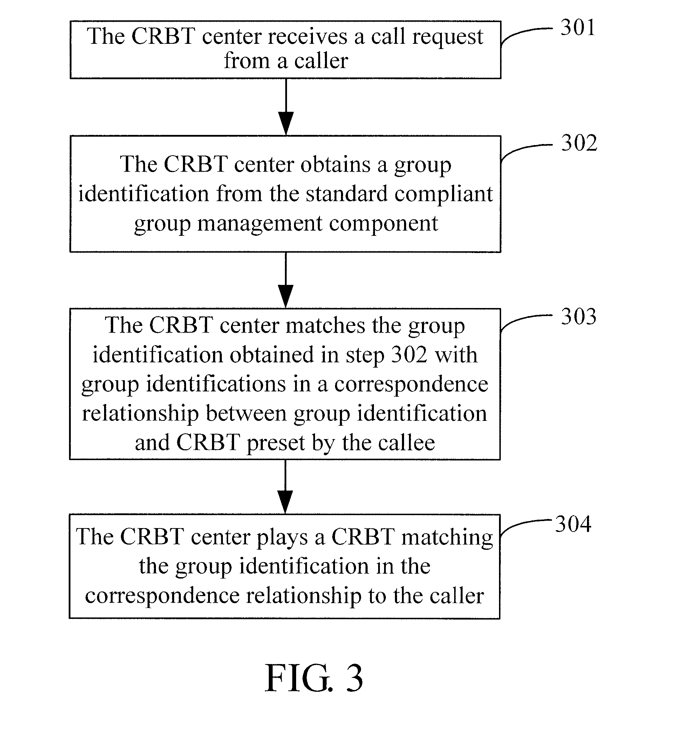

FIG.3 is a flow chart showing a method for playing a CRBT according to an embodiment of the invention.

In step 301, the CRBT center receives a call request from a caller.

In step 302, the CRBT center obtains a group identification from the standard compliant group management component.

In step 303, the CRBT center matches the group identification obtained in step 302 with group identifications in a correspondence relationship between group identification and CRBT preset by the callee, and plays a CRBT matching the group identification to the caller.

In an embodiment of the invention, the term "matching the group identification" refers to "being the same as the group identification".

In an embodiment of the invention, the standard compliant group management component may be a group management component of an EXtensible Markup Language (XML) document management server, for example, an XML Document Management Specification Group (XDMS Group), or any other component that manages groups in accordance with standards, which does not affect the implementation of the embodiments of the invention.

XDMS Group is a group storage and management component defined by Open Mobile Alliance (OMA). The information stored and managed in this component may include personal information and group information. The personal information includes personal identification, telephone number, Session Initiation Protocol (SIP) based terminal number, etc. The group information includes group identification, group member list, etc. A group may be classified as a public group or a private group. A public group is an open group, any member of which may obtain information about the public group. The group information for a private group is only visible to the creator of the group, and other members of the group cannot obtain information about the private group to which they belong.

Detailed descriptions will be made below to the method and system for playing a CRBT according to an embodiment of the invention, in which the capability component complying with a standard is XDMS Group, for example.

In the embodiment of the invention, the first call diverting unit 201 may be an MSC. The system, consisting of the MSC, the CRBT center, and the XDMS Group, may play a CRBT within the CS domain.

When the MSC serves as the first call diverting unit 201, the MSC obtains the subscription information of the callee, and determines whether the callee has subscribed for the CRBT service. If the callee has subscribed for the CRBT service, the call request from the caller is diverted to the CRBT center. Within the CS domain, the subscription information of the user is stored in the HLR.

The CRBT center 202 receives the call request initiated from the caller via the MSC, obtains a group identification from the XDMS Group, matches the group identification with group identifications in a correspondence relationship between group identification and CRBT preset by the callee, and plays a CRBT matching the group identification to the caller.

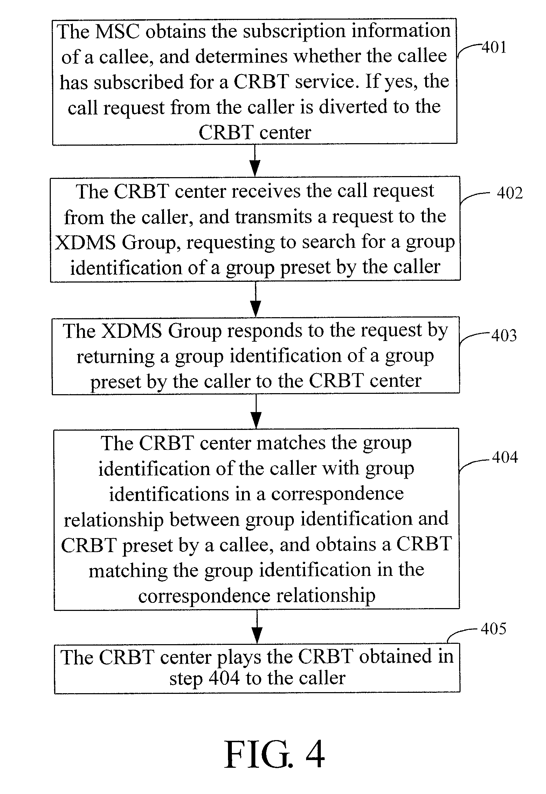

FIG.4 is a flow chart showing a method for playing a CRBT within the CS domain according to an embodiment of the invention.

In step 401, the MSC obtains the subscription information of a callee according to the callee number carried in a call request from a caller, and determines whether the callee has subscribed for a CRBT service. If the callee has subscribed for a CRBT service, the call request from the caller is diverted to the CRBT center.

In step 402, the CRBT center receives the call request from the caller, and transmits a request to the XDMS Group, requesting to search for a group identification of a group preset by the caller, via an interface of the XDMS Group for searching for group information.

In the embodiments of the invention, the interface of the XDMS Group for searching for group information is an interface based on standard open protocols such as XCAP or SOAP/WSDL.

In step 403, the XDMS Group responds to the request by returning a group identification of a group preset by the caller to the CRBT center.

In step 404, the CRBT center matches the group identification of the caller with group identifications in a correspondence relationship between group identification and CRBT preset by a callee, and obtains a CRBT matching the group identification.

In step 405, the CRBT center plays the CRBT obtained in step 404 to the caller.

Generally, the method provided according to the embodiment of the invention mainly applies to cases where a group CRBT is played to a caller when the caller is a public group member for the callee.

It can be seen from the above description that the public group is an open group, each member of which may obtain information about the group. According to the embodiments of the invention, the public group to which the callee and the caller belong, may be created by the caller, the callee, or a third party.

If the callee creates a public group whose group identification is group1, the group information about the callee managed by the XDMS Group may include a group identification group1 and a list of group members in which the telephone number of each user is stored. When the XDMS Group learns that the group set by the user is a public group, the XDMS Group will add the group identification group1 and the group member list to the group information corresponding to each member of the group.

If the caller is a public group member of the callee, the group identification of the public group set by the callee is also available in the group information corresponding to the caller. Therefore, the group identification of the caller may be used to match with the group identifications in the group CRBT policy of the callee, so as to obtain a CRBT to be played to the caller.

A process for the caller or the third party to set a public group is similar to the above procedure, and the description is thus omitted here. To sum up, the group information for each member in the public group includes information about the public group to which the member belongs.

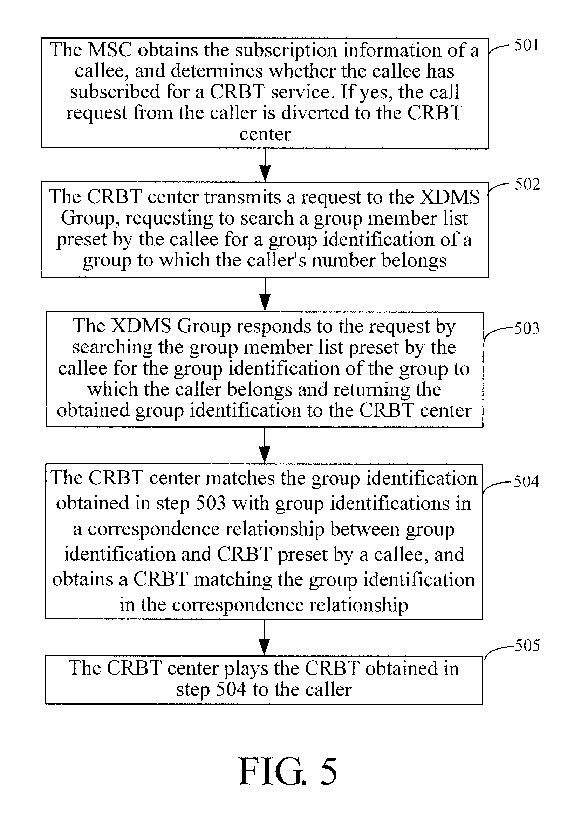

FIG.5 is a flow chart showing a method for playing a CRBT within the CS domain according to an embodiment of the invention.

In step 501, the MSC obtains the subscription information of a callee according to the callee number carried in a call request from a caller, and determines whether the callee has subscribed for a CRBT service. If the callee has subscribed for a CRBT service, the call request from the caller is diverted to the CRBT center.

In step 502, the CRBT center receives the call request from the caller, and transmits a request to the XDMS Group, requesting to search a group member list preset by the callee for a group identification of a group to which the caller's number belongs, via an interface of the XDMS Group for searching for group information.

In step 503, the XDMS Group responds to the request by searching the group member list preset by the callee for the group identification of the group to which the caller belongs, and returns the obtained group identification to the CRBT center.

In step 504, the CRBT center matches the group identification obtained in step 503 with group identifications in a correspondence relationship between group identification and CRBT preset by a callee, and obtains a CRBT matching the group identification.

In step 505, the CRBT center plays the CRBT obtained in step 504 to the caller.

Generally, the method provided according to the embodiment of the invention applies to cases where a group CRBT is played to a caller when the caller is a private group member for the callee and when the caller is a public group member for the callee.

In other embodiments of the invention, the first call diverting unit 201 may be a Call State Control Function (CSCF) server or a soft switch server. Furthermore, a system consisting of the CSCF server or soft switch server, the CRBT center, and the XDMS Group may play the CRBT within the PS domain.

The technical solution for playing the CRBT within the PS domain is different from the above mentioned technical solution for implementing CRBT service within the CS domain only in that within the PS domain, the CSCF or soft switch server obtains the subscription information of the callee and determines whether the callee has subscribed for a CRBT service. If the callee has subscribed for a CRBT service, the CSCF or soft switch server diverts the call request from the caller to the CRBT center. Moreover, within the PS domain, the subscription information of the users is stored in a Home Subscriber Server (HSS). Other steps are same as those for playing the CRBT within the CS domain as described above, and thus no repetition is made here.

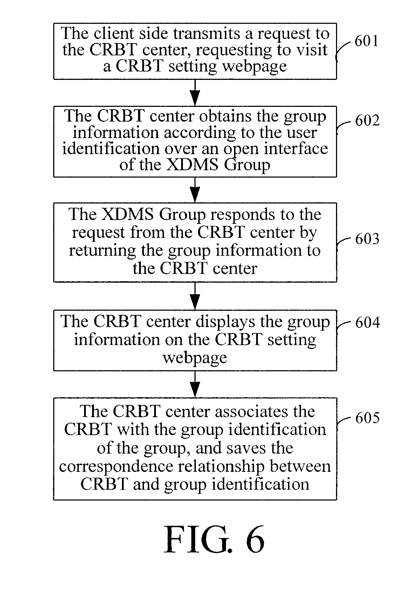

The CRBT usage is typically classified into two phases: CRBT setting and CRBT playing. Detailed descriptions have been given above to the method for playing a CRBT according to an embodiment of the invention. Descriptions will be made below to the method for setting a group CRBT according to an embodiment of the invention as shown in FIG.6.

In step 601, the client side transmits a request to the CRBT center, requesting to access a CRBT setting webpage.

In step 602, the CRBT center obtains the user preset group information according to the user identification by invoking the interface of the XDMS Group for searching for the group information.

The user identification may be the login name of the user, such as Zhang Sanfeng or the user code such as phone number 137****1102.

An example of the request to obtain the group information is provided as follows.

```
     GET
     http://xap.example.com/services/org.openmobilealliance.xcap-
 directory/users/sip:joebloggs@example.com/directory.xml HTTP/1.1
     ....
     Content-Length:0
```

In step 603, the XDMS Group responds to the request from the CRBT center by returning the group information to the CRBT center. The group information may include public group information and private group information.

An example of the group information returned from the XDMS Group is provided as follows.

```
     HTTP/1.1 200 OK
     .....
     Content-Type: application/oma-directory+xml
     Content-Length: (...)
     <?xml version="1.0" encoding="UTF-8"?>
     <xcap-directory xmlns="urn:oma:params:xml:ns:xcap-directory"
     xmlns:xsi="http://www.w3.org/2001/XMLSchema-instance">
     <entry
     url="http://xcap.example.com/services/resource-
 lists/users/sip:joebloggs@example.com/addresslist.xml" etag="pqr999"/>
     <folder auid="resource-lists">
     <entry
     url="http://xcap.example.com/services/resource-
 lists/users/sip:joebloggs@example.com/grouping.xml" etag="xyz123"/>
     </folder>
     <folder auid=" public-group">
     <entry url="http://xcap.example.com/services/ public-
 group/users/sip:joebloggs@example.com/bloggs.xml" etag="pqr999"/>
     <entry
     url="http://xcap.example.com/services/public-
 group/users/sip:hlhui@example.com/hlhuixml" etag="xyz123"/>
     </folder>
     </xcap-directory>
```

In step 604, the CRBT center displays the group information on the CRBT setting webpage.

The user then sets a CRBT for a group on the CRBT setting webpage.

In step 605, the CRBT center associates the CRBT with the group identification of the group, and saves the correspondence relationship between CRBT and group identification.

Descriptions have been made above to the technical solutions for playing and setting a CRBT within the CS domain and the PS domain. Since the XDMS Group may also manage the personal information, the personal information managed by the XDMS Group may be used to implement an enhanced personal CRBT service so that a user using several terminals may set the CRBT playing policy uniformly based on the user ID, rather than set the CRBT playing policy separately based on each user number.

Descriptions will be made below to the technical solutions for setting and playing a personal CRBT according to embodiments of the invention.

The CRBT system shown in FIG. 2 may also be applied to the system for implementing personal CRBT service as provided according to embodiments of the invention.

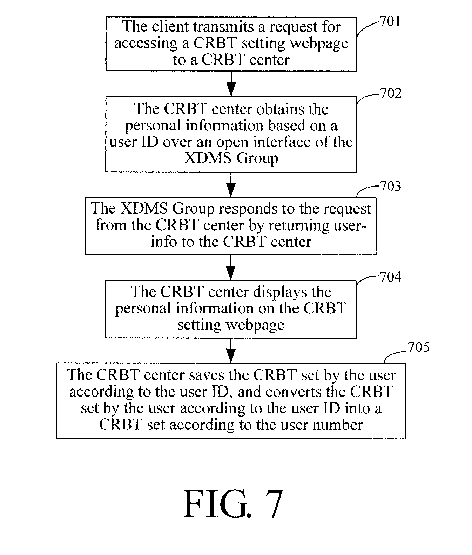

FIG.7 is a flow chart showing a method for setting a personal CRBT according to an embodiment of the invention.

In step 701, a client transmits a request for accessing a CRBT setting webpage to a CRBT center.

In step 702, the CRBT center obtains the user preset personal information (user-info) based on a user ID, by invoking an interface of the XDMS Group for searching for personal information.

An example of obtaining user personal information is as follows.

```
     GET
     http://xcap.example.com/service/PS-pim/user/sip:bill@example.com/indexHTTP/1.1
     ...
     Content-Length:0
```

In step 703, the XDMS Group responds to the request from the CRBT center by returning user-info to the CRBT center.

The user-info of the user may be defined as the following exemplary information.
< XS: Sequence >
< XS:element minOccurs="0"name ="home-tel" type="phone-num-type" />
< XS: element minOccurs="0" name ="home-tel" type="phone-num-type" />
< XS: element minOccurs="0" name ="office-tel" type="phone-num-type" />
< XS: element minOccurs="0" name ="mobile" type="phone-num-type" />
< XS: element minOccurs="0" name ="auto-tel" type="phone-num-type" />
</XS: Sequence >

In step 704, the CRBT center displays the personal information obtained in step 703 on the CRBT setting webpage.

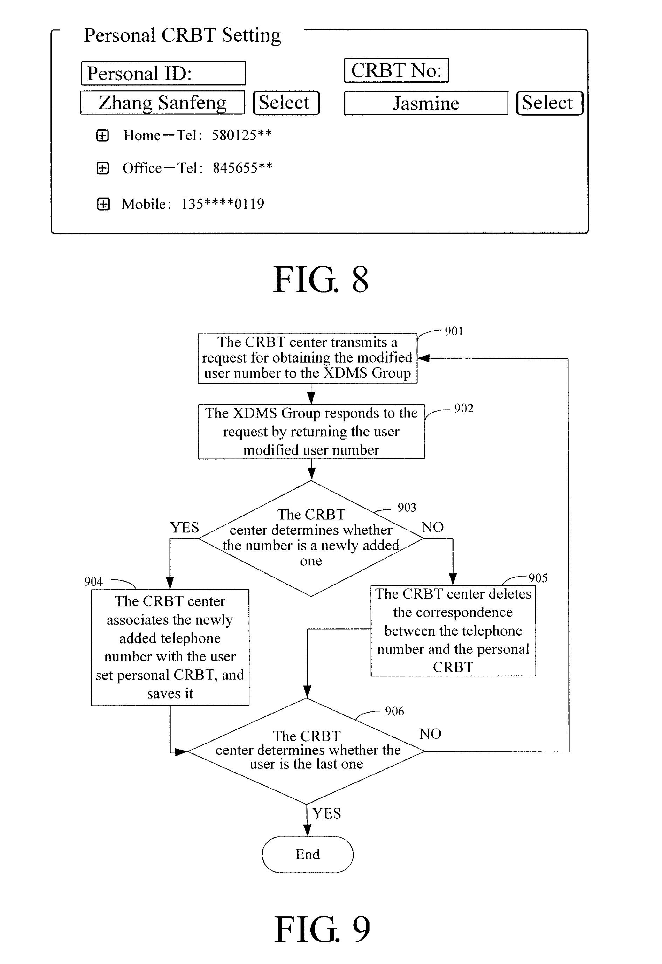

FIG.8 shows the personal information displayed on the CRBT setting webpage. Three telephone numbers are displayed in the contact list of the user "Zhang Sanfeng".

The user selects a user ID from the CRBT setting webpage and sets a personal CRBT.

In step 705, the CRBT center saves the CRBT playing policy set by the user according to the user ID, and converts the CRBT playing policy set by the user according to the user ID into a CRBT playing policy set according to the user number. In other words, the CRBT is associated with the user number corresponding to the user ID, and the correspondence relationship between the CRBT user number and the CRBT is saved.

For example, the user sets a personal CRBT for the user "Zhang Sanfeng" on the CRBT setting webpage. The CRBT center saves the CRBT policy set according to the user ID "Zhang Sanfeng": |priority|period|Zhang Sanfeng|jasminel. The CRBT center converts the above policy into the CRBT playing policy corresponding to the three telephone numbers of the user "Zhang Sanfeng".
|priority|period |Zhang Sanfeng : home-tel | 580125**|jasmine|
|priority|period |Zhang Sanfeng : office-tel | 845655**|asmine|
|priority|period |Zhang Sanfeng : mobile | 135****0119|jasmine|

When a user calls one user that has subscribed to the personal CRBT service, the CRBT center searches for a CRBT based on the callee number and then plays the CRBT.

Additionally, the user may modify the group information and the personal information saved in the XDMS Group. Therefore, when the user information in the XDMS Group changes, for example, when the user adds, modifies or deletes a telephone number, these changes of the user telephone number should be transmitted to the CRBT center. Then, the CRBT center may configure the CRBT automatically based on the modified information.

For example, in the above example, the phone number of the user Zhang Sanfeng may change from 135****0119 to 137****2890. The XDMS Group transmits the data to the CRBT center, and the CRBT center will make the following changes.
Delete: |priority|period |Zhang Sanfeng : mobile | 135****0119|jasmine|,
Add: |priority|period |Zhang Sanfeng : mobile | 137****2890|asmine|.

Now, descriptions will be given to the method for transmitting the data of the XDMS Group to the CRBT center when the CRBT service is implemented according to an embodiment of the invention.

In this embodiment of the invention, for example, the CRBT center periodically obtains the modified user number from the XDMS Group component actively. FIG. 9 shows the implementation of the data update.

In step 901, the CRBT center periodically or non-periodically transmits a request for obtaining the modified user number to the XDMS Group.

In step 902, the XDMS Group responds to the request by returning the user modified user number.

In step 903, the CRBT center determines whether the number is a newly added one. If the number is a newly added one, the process proceeds to step 904. If the number is not a newly added one, the number is a deleted telephone number, and the process proceeds to step 905.

In step 904, the CRBT center associates the newly added telephone number with the user set personal CRBT, and saves the correspondence between the newly added telephone number and the CRBT.

In step 905, the CRBT center deletes the association between the telephone number and the personal CRBT.

In step 906, the CRBT center determines whether the user is the last one. If the user is the last one, the process ends. Otherwise, the process goes to step 901.

In alternative embodiments of the invention, when the personal CRBT is set, the correspondence between the user ID and the CRBT may be stored in the CRBT center only, and there is no need to convert the CRBT play policy set by the user according to the user ID into the CRBT play policy set according to the user number.

If the above CRBT setting process is adopted, the method for playing the personal CRBT may include the following steps.

According to the callee number, the CRBT center may obtain the corresponding user ID from the XDMS Group. Then, the CRBT center searches for a CRBT from the correspondence relationship between user ID and CRBT, and plays the CRBT to the caller. Here, the user ID is equivalent to the above mentioned group identification.

Furthermore, when adopting the above CRBT setting method with which the correspondence relationship between user ID and CRBT is stored in the CRBT center only, there is no need to perform a data update operation.

Descriptions have been made above to the technical solutions for group CRBT service and personal CRBT service as provided in the embodiments of the invention. If a user subscribes to both personal CRBT service and group CRBT service, the CRBT center may search the personal CRBT for the callee as well as the group CRBT for the callee. If the CRBT center finds that both group CRBT and personal CRBT may be played to the caller, then it may decide a CRBT to be played to the caller according to the priority preset by the callee. If the group CRBT is set by the callee to have a playing priority, the group CRBT is played. If the personal CRBT is set by the callee to have a playing priority, the personal CRBT is played.

Moreover, in a specific implementation, if a callee subscribes to both personal CRBT service and group CRBT service, the CRBT center may determine that the callee subscribes to the CRBT service. And based on this, the CRBT center may further determine whether the call from the caller triggers the personal CRBT service or the group CRBT service. If the group CRBT service is triggered, the process proceeds to the service for playing the group CRBT. If the personal CRBT service is triggered, the process proceeds to the service for playing the personal CRBT service.

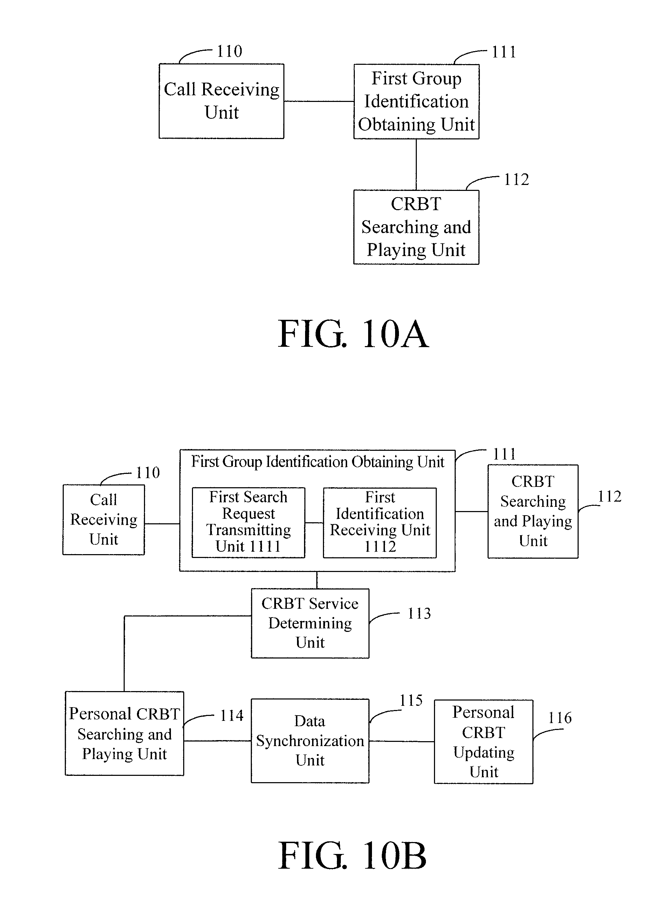

Also, an embodiment of the invention provides a CRBT center. Referring to FIG. 10A, the CRBT center includes a call receiving unit 110, a first group identification obtaining unit 111, and a CRBT searching and playing unit 112.

The call receiving unit 110 is configured to receive a call request from a caller.

The first group identification obtaining unit 111 is configured to obtain a group identification from a standard compliant group management component.

The CRBT searching and playing unit 112 is configured to match the group identification with group identifications in a correspondence relationship between group identification and CRBT preset by a callee, and to play a CRBT matching the group identification to the caller via the call connection.

Referring to FIG. 10B, if the CRBT center is used to implement CRBT playing when the callee sets the caller as a private group member, the first group identification obtaining unit 111 further includes a first search request transmitting unit 1111 and a first identification receiving unit 1112.

The first search request transmitting unit 1111 is configured to transmit a request to the standard compliant group management component, requesting to search a group member list preset by the callee for a group identification of a group to which the caller number belongs.

The first identification receiving unit 1112 is configured to receive the group identification returned from the standard compliant group management component.

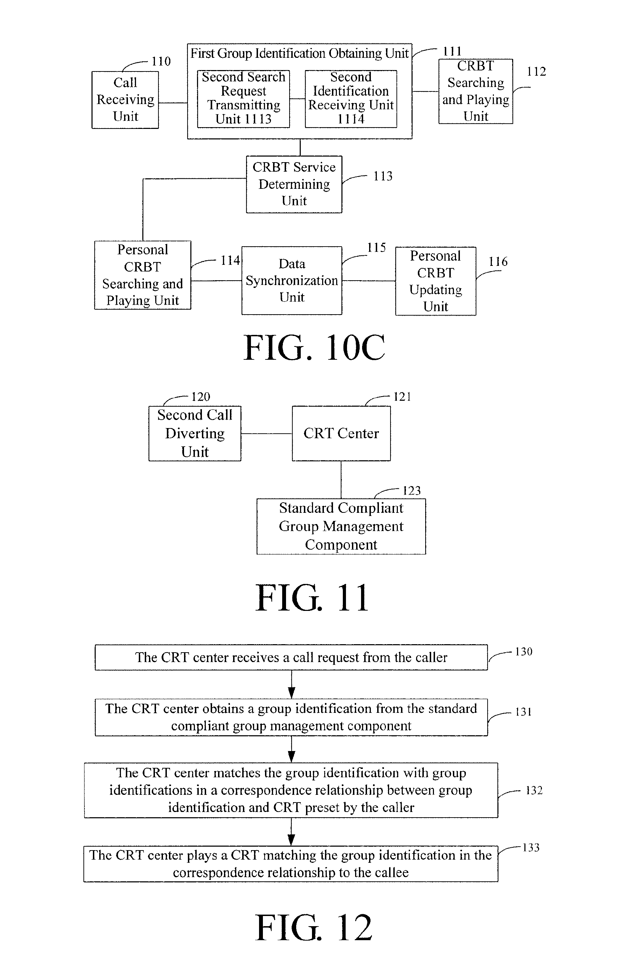

Referring to FIG. 10C, if the CRBT center is used to implement CRBT playing when the callee sets the caller as a public group member, the first group identification obtaining unit 111 further includes a second search request transmitting unit 1113 and a second identification receiving unit 1114.

The second search request transmitting unit 1113 is configured to transmit a request to the standard compliant group management component, requesting to search for a group identification of a group preset by the caller.

The second identification receiving unit 1114 is configured to receive the group identification returned from the standard compliant group management component.

Referring to FIG. 10B and FIG. 10C, if a user subscribes to both personal CRBT service and group CRBT service, the CRBT center further includes a CRBT service determining unit 113 and a personal CRBT searching and playing unit 114.

When determining that the caller triggers a group CRBT service, the CRBT service determining unit 113 is configured to trigger the first group identification obtaining unit 111. When determining that the caller triggers a personal CRBT service, the CRBT service determining unit 113 is configured to trigger the personal CRBT searching and playing unit 114.

The personal CRBT searching and playing unit 114 is configured to search a correspondence relationship between callee number and CRBT preset by the callee for a CRBT based on the callee's number, and to play the CRBT.

During the implementation of the personal CRBT service, to update the correspondence relationship between callee number and CRBT saved in the CRBT center, the CRBT center further includes the following components.

The data synchronization unit 115 is configured to obtain a callee number from the standard compliant group management component.

The personal CRBT updating unit 116 may update the preset correspondence relationship between callee number and CRBT based on the callee number.

Descriptions have been given above to the method, system and apparatus for playing CRBT as provided in the embodiments of the invention. Descriptions will be made below to the method and system for playing CRT with reference to the accompanying drawings.

FIG.11 is a block diagram showing the configuration of a system for playing a CRT within the PS domain according to an embodiment of the invention. The system may include a second call diverting unit 120, a CRT center 121, and a standard compliant group management component 123. The second call diverting unit 120 may be a CSCF or a soft switch server.

The second call diverting unit 120 is configured to determine whether the caller subscribes to the CRT service based on the subscription information of the caller. If the caller subscribes to the CRT service, a call request from the caller is diverted to the CRT center 121.

The CRT center 121 receives the call request from the caller, establishes a CRT early media session with the callee, obtains a group identification from the standard compliant group management component 123, matches the group identification with group identifications in a correspondence relationship between group identification and CRT preset by the caller, and plays a CRT matching the group identification to the callee.

The standard compliant group management component 123 may be an XDMS Group, or any other component that manages group information according to a standard.

FIG.12 is a flow chart showing a method for playing a CRT according to an embodiment of the invention.

In step 130, the CRT center receives a call request from the caller.

In step 131, the CRT center obtains a group identification from the standard compliant group management component.

In step 132, the CRT center matches the group identification with group identifications in a correspondence relationship between group identification and CRT preset by the caller.

In step 133, the CRT center plays a CRT matching the group identification to the callee.

Similar to the above mentioned CRBT playing method, in the CRT playing process, if the group identification obtained by the CRT center from the standard compliant group management component is the group identification of the callee, the method is mainly applicable to playing CRT to the callee when the callee is a public group member for the caller.

If the group identification obtained by the CRT center from the standard compliant group management component is the group identification of the caller and the caller has set multiple groups, the CRBT center may further obtain a group member list of the caller. Based on the callee number, the CRBT center searches the caller's group member list for the group to which the callee belongs, determines the group identification of the group, matches the group identification with the group identifications in the correspondence relationship between group identification and CRT preset by caller, and obtains a ring tone to be played to the callee. No matter whether the callee is set by the caller as a public group member or a private group member, the method may be used to play CRT to the callee.

Those skilled in the art will appreciate that all or some of the steps in the above exemplary method may be performed by a program to instruct the associated hardware. The program may be stored in a computer readable storage media. When the program is executed, the following steps are included.

A method for playing a Customized Ring-Back-Tone (CRBT), including:
receiving, by a CRBT center, a call request from a caller, and obtaining a group identification from a standard compliant group management component; and
matching, by the CRBT center, the group identification with group identifications in a correspondence relationship between group identification and CRBT preset by a callee, and playing a CRBT matching the group identification to the caller.

A method for playing a Customized Ring-Tone (CRT), including:
receiving, by a CRT center, a call request from a caller, and obtaining a group identification from a standard compliant group management component; and
matching, by the CRT center, the group identification with group identifications in a correspondence relationship between group identification and CRT preset by the caller, and playing a CRT matching the group identification to the callee.

The above mentioned storage media may be a Read-Only Memory (ROM), a magnetic disk, or an optical disc. Alternatively, the storage media may be a Read-Only Memory (ROM) or a Random Access Memory (RAM) or the like.

According to the CRBT playing method provided in the embodiments of the invention, the CRBT center searches for the user's group information, and determines the group to which the caller belongs and the CRBT corresponding to the group. Therefore, in the embodiments of the invention, the group information preset by the user may be stored in the standard compliant group management component. Moreover, the group information, managed in the standard compliant group management component, complies with the standard communication specifications, so other systems which also need to use the group information, for example, the billing system, the messaging system, and so on, may share the group information in the CRBT service. The problem of repetitively defining the group information may be avoided, and system resources may be saved.

According to the CRBT playing method provided in the embodiments of the invention, CRBT playing service may be implemented in both the CS domain and the PS domain. Further, the CRBT playing service implemented in the PS domain may overcome the defects of the prior art when implementing CRBT playing service in the CS domain.

According to the CRT playing method provided in the embodiments of the invention, after the CRT center receives a call request from the caller, it exchanges information with the standard compliant group management component, and determines a CRT to be played to the callee according to the correspondence relationship between group identification and CRT preset by caller. Thus, the group CRT service may be achieved in the PS domain. Furthermore, because the group information, managed in the standard compliant group management component, complies with standard communication specifications, other systems which also need to use the group information, for example, the billing system, the messaging system, the CRBT system, and so on, may share the group information in the CRT service. The problem of repetitively defining the group information may be avoided, and system resources may be saved.

Detailed descriptions have been made above to the ring tone playing methods, systems, and the CRBT center as provided in the invention. To those skilled in the art, various equivalent changes are possible without departing from the scope of the invention. Therefore, the illustrative embodiments shall not be construed to limit the scope of the invention.

## Claims

1. A method for playing a Customized Ring-Back-Tone (CRBT), comprising:
receiving, by a CRBT center, a call request from a caller, and obtaining a group identification from a standard compliant group management component; and
matching, by the CRBT center, the group identification with group identifications in a correspondence relationship between group identification and CRBT preset by a callee, and
playing a CRBT matching the group identification to the caller.

2. The method according to claim 1, wherein obtaining the group identification from the standard compliant group management component further comprises:
transmitting, by the CRBT center, a request to the standard compliant group management component, requesting to search for a group identification of a group preset by the caller; and
receiving, by the CRBT center, the group identification returned from the standard compliant group management component.

3. The method according to claim 1, wherein obtaining the group identification from the standard compliant group management component further comprises:
transmitting, by the CRBT center, a request to the standard compliant group management component, requesting to search a group member list preset by the callee for a group identification of a group to which the caller's number belongs; and
receiving, by the CRBT center, the group identification returned from the standard compliant group management component.

4. The method according to claim 1, wherein the standard compliant group management component is a group management component of an EXtensible Markup Language (XML) document management server.

5. The method according to claim 1 or 4, wherein after the CRBT center receives the call request from the caller, the method further comprises:
determining, by the CRBT center, whether a CRBT service triggered by the call request from the caller is a personal CRBT service;
wherein, if the CRBT service is a personal CRBT service, the CRBT center is configured to search a preset correspondence relationship between callee number and CRBT for a CRBT based on the callee's number, and to play the CRBT.

6. The method according to claim 5, further comprising:
obtaining, by the CRBT center, the callee number from the standard compliant group management component, and
updating the preset correspondence relationship between the callee number and CRBT based on the callee number.

7. A Customized Ring-Back-Tone (CRBT) center, comprising a call receiving unit (110), a first group identification obtaining unit (111), and a CRBT searching and playing unit (112), wherein:
the call receiving unit (110) is configured to receive a call request from a caller;
the first group identification obtaining unit (111) is configured to obtain a group identification from a standard compliant group management component; and
the CRBT searching and playing unit (112) is configured to match the group identification with group identifications in a correspondence relationship between group identification and CRBT preset by a callee, and to play a CRBT matching the group identification to the caller.

8. The CRBT center according to claim 7, wherein the first group identification obtaining unit (111) further comprises a first search request transmitting unit (1111) and a first identification receiving unit (1112), wherein:
the first search request transmitting unit (1111) is configured to transmit a request to the standard compliant group management component, requesting to search a group member list preset by the callee for a group identification of a group to which the caller belongs; and
the first identification receiving unit (1112) is configured to receive the group identification returned from the standard compliant group management component.

9. The CRBT center according to claim 7, wherein the first group identification obtaining unit (111) further comprises a second search request transmitting unit (1113) and a second identification receiving unit (1114), wherein:
the second search request transmitting unit (1113) is configured to transmit a request to the standard compliant group management component, requesting to search for a group identification of a group preset by the caller; and
the second identification receiving unit (1114) is configured to receive the group identification returned from the standard compliant group management component.

10. The CRBT center according to claim 7, 8, or 9, further comprising a CRBT service determining unit (113) and a personal CRBT searching and playing unit (114), wherein:
the CRBT service determining unit (113) is configured to trigger the first group identification obtaining unit (111) when determining that the call request from the caller triggers a group CRBT service;
the CRBT service determining unit (113) is configured to trigger the personal CRBT searching and playing unit (114) when determining that the call request from the caller triggers a personal CRBT service; and
the personal CRBT searching and playing unit (114) is configured to search a preset correspondence relationship between callee number and CRBT for a CRBT based on the callee's number, and to play the CRBT.

11. The CRBT center according to claim 10, further comprising:
a data synchronization unit (115), configured to obtain a callee number from the standard compliant group management component; and
a personal CRBT updating unit (116), configured to update the preset correspondence relationship between the callee number and CRBT based on the callee number.

12. A system for playing a Customized Ring-Back-Tone (CRBT), comprising a CRBT center (202), a first call diverting unit (201), and a standard compliant group management component (203), wherein:
the first call diverting unit (201) is configured to obtain a call request from a caller, and to divert the call request to the CRBT center;
the standard compliant group management component (203) is configured to store a group identification preset by a user; and
the CRBT center (202) is configured to receive the call request from the caller, to obtain a group identification from the standard compliant group management component, to match the group identification with group identifications in a correspondence relationship between group identification and CRBT preset by a callee, and to play a CRBT matching the group identification to the caller.

13. The system according to claim 12, wherein the first call diverting unit (201) is a Call Session Control Function (CSCF) server.

14. The system according to claim 12 or 13, wherein the standard compliant group management component (203) is a group management component of an EXtensible Markup Language (XML) document management server.

15. A method for playing a Customized Ring-Tone (CRT), comprising:
receiving, by a CRT center, a call request from a caller, and obtaining a group identification from a standard compliant group management component; and
matching, by the CRT center, the group identification with group identifications in a correspondence relationship between group identification and CRT preset by the caller, and playing a CRT matching the group identification to the callee.

16. The method according to claim 15, wherein the standard compliant group management component is a group management component of an EXtensible Markup Language (XML) document management server.

17. A system for playing a Customized Ring-Tone (CRT), comprising a CRT center (121), a standard compliant group management component (123), and a second call diverting unit (120), wherein:
the second call diverting unit (120) is configured to obtain a call request from a caller, and to divert the call request to the CRT center;
the standard compliant group management component (123) is configured to store a group identification preset by a user; and
the CRT center (121) is configured to receive the call request from the caller, to obtain a group identification from the standard compliant group management component, to match the group identification with group identifications in a correspondence relationship between group identification and CRT preset by the caller, and to play a CRT matching the group identification to the callee.
